# EUROPEAN PATENT APPLICATION

(11) **EP 3 738 931 A1**
(43) Date of publication of application: **18.11.2020**
(21) Application number: 19201808.3
(22) Date of filing: 08.10.2019
(51) Int. Cl.: C02F 1/461, C02F 103/02

(54) **HYDROGENATED WATER GENERATOR**

(30) Priority: 13.05.2019 KR 20190055933; 10.07.2019 KR 20190083307
(71) Applicant: LG Electronics Inc., Seoul 07336 (KR)
(72) Inventor: YOO, Hyun Sun, 07365 Seoul (KR); KIM, Joo Gyeom, 06213 Seoul (KR); CHUN, Jae Hung, 07980 Seoul (KR)
(74) Representative: Vossius & Partner Patentanwälte Rechtsanwälte mbB

(57) **Abstract**

A hydrogen water generator includes a water tank for receiving and storing water, an electrode module coupled to the water tank for generating hydrogen water in the water tank, a water outlet pipe, a pump for pumping the hydrogen water stored in the water tank to one end of the water outlet pipe, a water outlet disposed at an other end of the water outlet pipe, and a sealing plate coupled to the water outlet. The hydrogen water generator includes a moving part and an actuator to move the moving part so that the sealing plate closes an opening of a water container.

## Description

### Field of the Disclosure

The present disclosure relates to a hydrogen water generator, and to a hydrogen water generator that generates hydrogen water and discharges hydrogen water.

### Background

Oxygen radicals are highly oxidizing agents that, in a human body, attack cells and cause damage. Excessive oxygen radicals within the human body can bring about disease related to old age and can be a direct cause of aging itself.

When hydrogen is absorbed into the human body, the hydrogen reacts with the oxygen radicals to form sweat or urine that is expelled from the human body, and thus hydrogen is considered a strong antioxidant that suppresses oxygen radicals.

There is high interest in hydrogen water as a means of absorbing hydrogen into the human body, and in particular to hydrogen water generators that generate hydrogen water for drinking. Hydrogen water is water in which hydrogen has been dissolved.

However, for the hydrogen water to react with oxygen radicals to form harmless water, high concentration of hydrogen should be present in the water, but hydrogen, being a nonpolar molecule, does not readily dissolve in water. Therefore, even though hydrogen water is generated and dissolved in water, hydrogen readily escapes leaving the hydrogen water with low hydrogen concentration.

Accordingly, while it is important to efficiently decompose water into hydrogen and oxygen in a hydrogen water generator to generate a large volume of hydrogen, it is equally important for the hydrogen water generator to maintain a high concentration of hydrogen in the hydrogen water and prevent hydrogen loss until the hydrogen water is consumed by a user.

For instance, ways of preventing hydrogen from escaping during dispensing of the hydrogen water from the hydrogen water generator should be considered.

An example of a hydrogen water generator may be found in Korean Patent Publication No. 2018-0011727 which generates cold hydrogen water. The hydrogen water generator includes an electrolyzer within the body to electrically decompose water to generate hydrogen water, and includes a hydrogen water discharger and a cup holder outside of the body. A cup is placed on the cup holder and through the discharger, hydrogen water is discharged so that a user may consume the hydrogen water filled cup.

However, when hydrogen water is simply discharged from the discharger, substantial amount of hydrogen may be lost as there is no means of sealing the hydrogen water from the outside environment during dispensing.

Another example of a hydrogen water generator may be found in Korean Patent No. 1742948. In order to generate hydrogen water, a water bottle is combined with an oxygen/hydrogen generator and the water inside the water bottle is combined with the hydrogen of the hydrogen generator to generate hydrogen water.

However, in this hydrogen water generator, there is no disclosure as to the means or method of sealing the hydrogen water from the outside environment, and the loss of hydrogen during dispensing is not solved. Also, in order for the user to drink hydrogen water in the water bottle, the bottle must first be separated from the oxygen/hydrogen generator. However, the screw coupling structure of the portable water bottle and the water bottle cap, and the elastic contact structure of the silicon nozzle cap and the nozzle contact structure are required to combine the portable water bottle and oxygen/hydrogen generator, and considerable time is required to separate the portable water bottle from the oxygen/hydrogen generator, and thus is inconvenient.

When separating the portable water bottle from the oxygen/hydrogen generator, the user has to rotate/pull the water bottle cap to detach the cap fastening groove from the fastening protrusion, and then remove the bottle cap from the portable water bottle by turning the water bottle cap, and thus experiences inconvenience.

Further, in order to drink the hydrogen water from the water bottle, the hydrogen water is poured into a cup. But, there is no means or method of sealing the hydrogen water from the outside environment while pouring, and the loss of hydrogen is not prevented.

In addition, it is impossible to discharge only the required amount of hydrogen water to drink from the oxygen/hydrogen generator. One could consider drinking directly drinking from the water bottle. However, it would be necessary to drink all the hydrogen water in the water bottle at once, as the loss of hydrogen of the generated hydrogen water will start to proceed very rapidly once the bottle is opened.

In order to recombine the water bottle to the oxygen/hydrogen generator, the process of screwing the bottle cap to the portable water bottle, inserting the bottle cap of the bottle and rotating to attach the cap fastening groove to the fastening protrusion cap, and elastically contacting the silicon nozzle cap and the nozzle contact structure must be performed, which is cumbersome and complicated.

Since the complexity of use may be a major factor in deterring users from using hydrogen water generators and a desire to purchase one, improvement is required in this regard.

Meanwhile, another example of a hydrogen water generator may be found in Korean Patent No. 1795735. The hydrogen water generator includes a hydrogen generation module, a storage unit, a power supply unit, a sensor unit and a control unit.

The hydrogen water generator can be used as follows: First, a straw is inserted into a cup filled with drinking water. Then, one side of a tube is connected to a connector portion of an adapter cap provided at the top of the hydrogen generator, and the other side of the tube is connected to the straw. The hydrogen water generator can then be operated to introduce hydrogen into the cup filled with drinking water through the tube to be dissolved and then the generated hydrogen water may be consumed.

Again, in the process of dispensing the generated hydrogen water, there is no means or method of sealing the hydrogen water from the outside environment, and it is impossible to discharge only the required amount of hydrogen water to drink, like the oxygen/hydrogen generator previously discussed.

In addition, immediately before drinking the hydrogen water, the hydrogen water may need to be contained in cups of various sizes according to necessity or depending on the situation. It is difficult to prevent the loss of hydrogen from the hydrogen water when cups of various sizes have to be considered.

### Summary

One aspect is to provide a hydrogen water generator having a structure for discharging the hydrogen water in a water container such as a cup, which is convenient to use.

Another aspect is to provide a hydrogen water generator that closes the openings of the water containers when discharging the hydrogen water, even when the water containers have different sizes or shapes of opening.

Another aspect is to provide a hydrogen water generator that when the user puts the container under the water outlet receive the hydrogen water, the opening of the water container is sealed from the outside air, and after the discharge of the hydrogen water in the sealed state, the opening of the water container is released, hereby minimizing hydrogen loss.

Another aspect is to provide a hydrogen water generator that may close an opening of the water container even when the water container is not placed in the optimum position for the sealing.

Another aspect is to provide a hydrogen water generator that may move the water container to the optimum position when closing the opening of the water container even when the water container is not placed in the optimum position for sealing.

Another aspect is to provide a hydrogen water generator capable of inducing athe wate container to be placed in an optimal position for sealing.

Another aspect is to provide a hydrogen water generator in which the inside of the container is automatically sealed from the outside environment, even if the top opening of the water container is asymmetrical or has a height difference.

The disclosure discloses a hydrogen water generator including a water tank for receiving and storing water; an electrode module coupled to the water tank for generating hydrogen water in the water tank; a water outlet pipe; a pump for pumping the hydrogen water stored in the water tank to one end of the water outlet pipe; a water outlet disposed at an other end of the water outlet pipe; a sealing plate coupled to the water outlet; a moving part; and an actuator to move the moving part so that the sealing plate closes an opening of a water container.

The disclosure discloses a hydrogen water generator including a body including an upper protruding portion; a water tank for receiving and storing water; an electrode module coupled to the water tank for generating hydrogen water in the water tank; a water outlet pipe; a pump for pumping the hydrogen water stored in the water tank to one end of the water outlet pipe; a water outlet disposed at an other end of the water outlet pipe; a sealing plate coupled to the water outlet; a moving part movably disposed at the upper protruding portion of the body, the moving part including the sealing plate at an end of the moving part exposed from the body; an actuator to move the moving part up and down to respectively open and close an opening of a water container through the sealing plate; an operation button; and a controller.
when the operation button is pressed, the controller is configured to operate the actuator to move the moving part downward to close the opening of the water container through the sealing part, and then operate the pump to pump the hydrogen water stored in the water tank to the water outlet to be discharged into the water container.

### Brief Description of the Drawings

FIG. 1A is a cross-sectional view showing a hydrogen water generator and a water container according to an embodiment of the present invention.
FIG. 1B is a side view showing a hydrogen water generator and a water container according to another embodiment of the present invention.
FIG. 2 is a cross-sectional view showing a water tank and an electrode module according to an embodiment of the present invention.
FIG. 3 is a cross-sectional view showing an electrode module according to an embodiment of the present invention.
FIGs. 4A, 4B and 4C are cross-sectional views showing states in which a water container may be placed on a seating surface in a hydrogen water generator.
FIG 5A is a bottom view showing a sealing plate according to an embodiment of the present invention.
FIGs. 5B and 5C are side cross-sectional views showing a portion of a sealing plate according to another embodiment of the present invention.
FIGs. 6A and 6B are side views showing states of use and operation of a hydrogen water generator according to an embodiment of the present invention.
FIGs. 7A and 7B are side views showing states of use and operation of a hydrogen water generator according to another embodiment of the present invention.
FIGs. 8A and 8B are side views showing states of use and operation of a hydrogen water generator according to another embodiment of the present invention.
FIG. 9A is a perspective view showing a state of use of a hydrogen water generator according to another embodiment of the present invention.
FIG. 9B is a bottom perspective view of the hydrogen water generator shown in FIG. 9A.
FIGs. 10A and 10B are side views showing states of use and operation of the hydrogen water generator shown in FIG. 9A.
FIGs. 11A and 11B are side cross-sectional views including partial enlarged views showing states of use and operation of the hydrogen water generator shown in FIG. 9A.
FIG. 12 is an exploded perspective view showing the hydrogen water generator shown in FIG. 9A.
FIG. 13A is a side cross-sectional view showing another state of use of a portion of the hydrogen water generator shown in FIG. 11A.
FIG. 13B is a side view showing a hydrogen water generator according to another embodiment of the present invention.
FIGs. 14A, 14B, and 14C are cross-sectional views explaining an action between a sealing plate and a top of a water container at a portion indicated by B in FIG. 13B.
FIGs. 15A, 15B, and 15C are cross-sectional views explaining an action between a sealing plate and a top of a water container at a hydrogen water generator according to another embodiment of the present invention.
FIGs. 16A and 16B are side views showing a sealing plate according to another embodiment of the present invention.
FIG. 17A is a side view showing a hydrogen water generator according to another embodiment of the present invention.
FIG. 17B is a plan view showing a seating surface at the hydrogen water generator of FIG. 17A.
FIG. 18A is a view explaining an action between a seating surface and a water container (shown as a dashed circle) at a hydrogen water generator according to another embodiment of the present invention.
FIG. 18B is a view explaining an action between a seating surface and a water container (shown as a dashed circle) at the hydrogen water generator according to another embodiment of the present invention.
FIG. 19A and 19B are side cross-sectional views showing a state of use of a portion of hydrogen water generator according to another embodiment of the present invention.
FIG. 20 is a side cross-sectional view showing a sealing plate according to another embodiment of the present invention.
FIG. 21 is a perspective view showing another kind of water container being used at the hydrogen water generator shown in FIG. 9A.
FIGs. 22A and 22B are side cross-sectional views showing a state of use of a part of the hydrogen water generator shown in FIG. 21.

### Detailed Description of the Preferred Embodiments

Hereinafter, preferred embodiments of the present invention will be described in detail with reference to the accompanying drawings. In the drawings, like numbers may refer to like elements.

X, Y and Z directions shown in the drawings for explaining the embodiments of the present invention are directions perpendicular to each other. Further, a front-back direction corresponds to the X direction or a direction parallel to the X direction, a left-right direction corresponds to the Y direction or a direction parallel to the Y direction, and an up-down direction corresponds to the Z direction or a direction parallel to the Z direction.

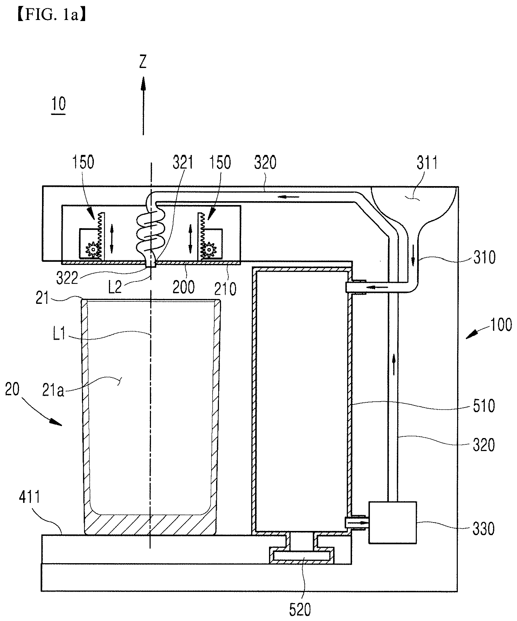

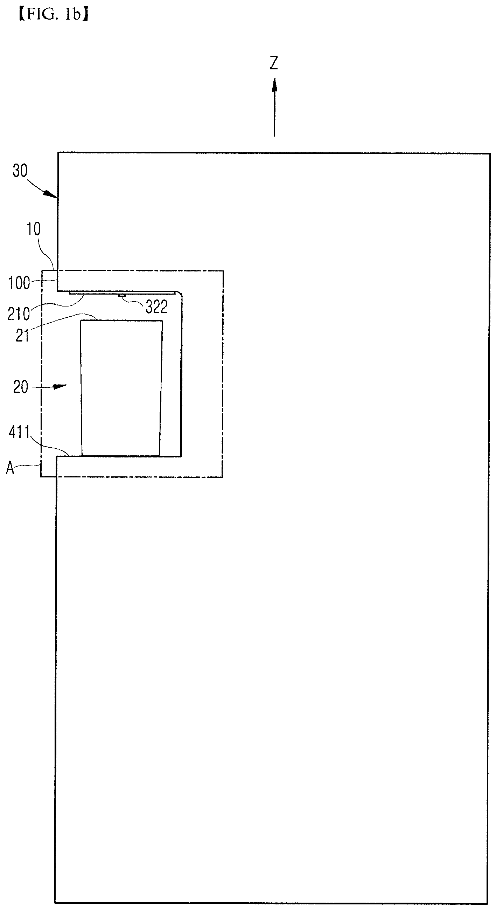

FIG. 1A is a cross-sectional view showing a hydrogen water generator 10 and a water container 20 according to an embodiment of the present invention, and FIG. 1B is a side view schematically illustrating a hydrogen water generator 10 and a water container 20 according to another embodiment of the present invention.

The hydrogen water generator 10 according to an embodiment of the present invention may be an independent device by itself. That is, a main body 100 of the hydrogen water generator 10 may be an independent device as illustrated in FIG. 1A.

Alternatively, the hydrogen water generator 10 according to an embodiment of the present invention may be part of an another apparatus. For example, the hydrogen water generator 10 may be coupled with another appliance 30 such as a water dispenser, a water purifier or a refrigerator to form part of that appliance 30. That is, the main body 100 of the hydrogen water generator 10 may be integrally formed with the appliance 30 as illustrated in FIG. 1B. The appliance 30 may also function, for example, as a water dispenser, a water purifier or a refrigerator.

The hydrogen water generator 10 according to the embodiment of the present invention generates hydrogen water, which is water in which hydrogen is dissolved, and receives the water container 20, which may be a cup, having an opening 21 opened upwardly, into which the hydrogen water is discharged. The water container 20 may be viewed as having a space 21a with an upper edge having an opening 21.

In the description to follow, the side on which the opening 21 is formed with respect to the water container 20 will be known as an upper side and the opposite side (the bottom side of the water container 20) will be known as a lower side.

Also, description will be made with reference to an imaginary line passing through a center of the water container 20 in an up-down direction (Z direction) known as a first center line L1. When the opening 21 of the water container 20 is circular, the first center line L1 passes through the center of the opening 21. The water container 20 may be rotationally and symmetrically disposed about the first center line L1.

The hydrogen water generator 10 according to the embodiment of the present invention comprises a main body 100 forming an overall appearance, a water inlet 311 for receiving regular water, a water tank 510, an electrode module 520, a water pump 330, and a water outlet 322.

The water inlet 311 forms a regular water inlet and includes a water passage 310 in which regular water is introduced into the hydrogen water generator 10, and in particular, into the water tank 510. Regular water introduced into the water tank 510 may be the water prior to the hydrogen water being generated.

The water tank 510 may be formed in a shape suitable for storing the regular water. The water tank 510 may be formed to be partially transparent or translucent. The regular water in the water tank 510 may be converted into hydrogen water by the electrode module 520, which will be described further below. The water pump 330 may pump the hydrogen water inside the water tank 510 to flow through a hydrogen water passage 320 to the water outlet 322. When a discharge of hydrogen water is required, the water pump 330 may pump the hydrogen water stored in the water tank 510 towards the water outlet 322.

The water outlet 322 forms an outlet through which hydrogen water is discharged to the outside of the hydrogen water generator 10. The water outlet 322 may be configured to open downward such that the hydrogen water is discharged downward towards the water container 20.

In the hydrogen water generator 10 according to the embodiment of the present invention, a water outlet pipe 321 having a tubular shape may be provided to couple with the water outlet 322. In this embodiment, the water outlet pipe 321 is configured as a hose. The water outlet pipe 321 may be configured such that its shape or length is variable. For example, the water outlet pipe 321 may be formed as a coil that may extend and contract. The water outlet pipe 321 may be at least partially deformable, or at least partially flexible and may be made of flexible plastic or rubber, for example.

In the description to follow, an imaginary line in the up-down direction (Z direction) passing through the water outlet 322 will be known as a second center line L2.

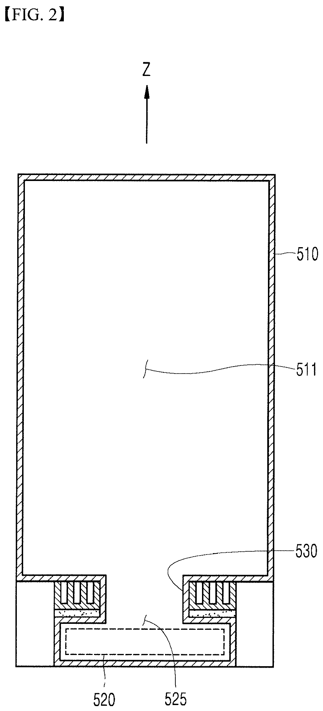

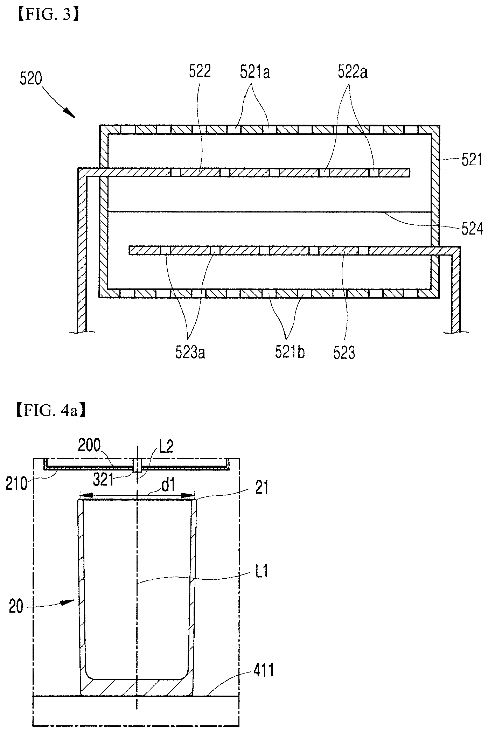

FIG. 2 is a cross-sectional view showing a water tank 510 and an electrode module 520 according to an embodiment of the present invention. FIG. 3 is a cross-sectional view showing an electrode module 520 according to an embodiment of the present invention.

The electrode module 520 may be configured to generate hydrogen water by electrolyzing water. The electrode module 520 may be disposed at a lower side of the water tank 510, and a space 525 in which the electrode module 520 is located is in communication with a water storage space 511 of the water tank 510 through a channel 530. Therefore, water stored in the water tank 510 may be in contact with the electrode module 520. When the electrode module 520 operates the electrode module 520 generates hydrogen which increases the concentration of hydrogen dissolved in the water stored in the water tank 510.

Referring to FIG. 3, the electrode module 520 includes a pair of electrodes (a first electrode 522 and a second electrode 523). The first electrode 522 and the second electrode 523 form different poles. For example, the first electrode 522 may be a cathode and the second electrode 523 may be an anode. The electrode module 520 may include a case 521 having a plurality of holes 521a and 521b formed therethrough and forming a predetermined inner space. The first electrode 522 and the second electrode 523 may be supported by the case 521, and at least a part thereof may be accommodated in the inner space of the case 521. In addition, the electrode module 520 may include a diaphragm 524 (an ion separation membrane) disposed between the first electrode 522 and the second electrode 523.

The first electrode 522 may be made of an electrically conductive metal, and, for example, may be a metal plate, and may be in a form of a porous plate having a plurality of holes 522a formed therethrough. The second electrode 523 may also be made of an electrically conductive metal, and, for example, may be a metal plate, and may be in a form of a porous plate having a plurality of holes 523a formed therethrough.

The diaphragm 524 may be a polymer film made of a silicon material.

When current is supplied to the first electrode 522 and the second electrode 523, water is electrolyzed, and having the diaphragm 524 as the center, among the first electrode 522 and the second electrode 523, hydrogen is generated at one electrode and oxygen is generated at the other electrode.

The electrode module 520 described above is exemplary and the electrode module may be formed in various ways capable of generating hydrogen by electrolysis of water. For example, Korean Patent Nos. 1883864, 1742948, etc., provides various examples of an electrode module.

Referring back to FIG. 2, the channel 530 connects the water tank 510 and the electrode module 520 as a longitudinal tube-like passage. Water contained in the water tank 510 is in contact with the electrode module 520 through the channel 530. Hydrogen generated by the electrode module 520 disperses and dissolves in the water stored in the water tank 510 through the channel 530.

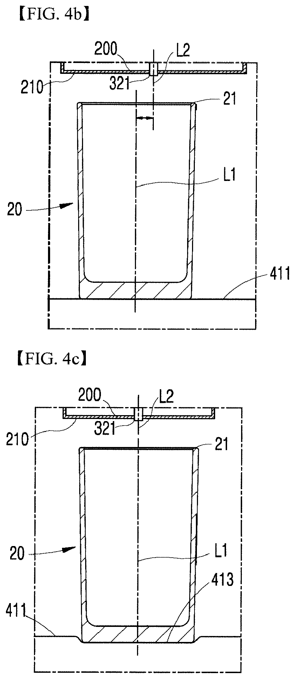

FIGs. 4A, 4B, and 4C are cross-sectional views showing states in which the water container 20 may be placed on a seating surface 411 in the hydrogen water generator 10 according to an embodiment of the present invention.

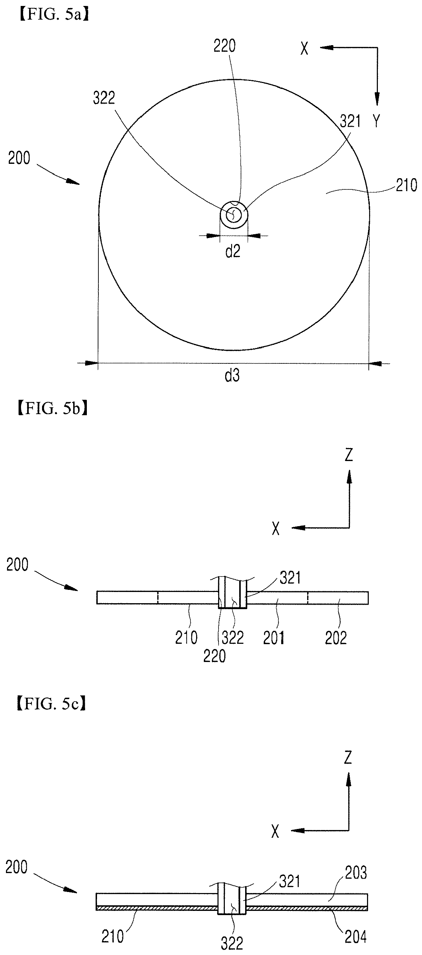

FIG. 5A is a bottom view illustrating a sealing plate 200 according to an embodiment of the present invention, and FIGs 5B and 5C are side cross-sectional views showing a portion of a sealing plate 200 according to another embodiment of the present invention.

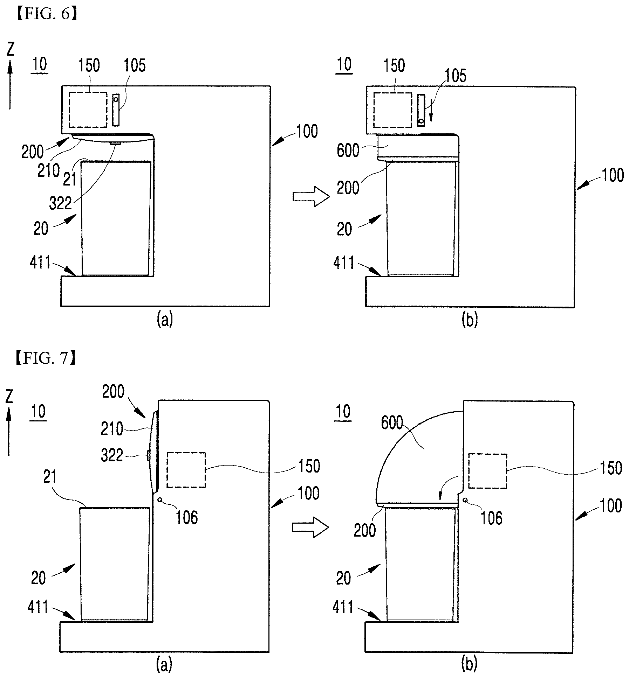

FIGs. 6A-6B, 7A-7B, and 8A-8B are side views showing states of use and operation of a hydrogen water generator 10 according to various embodiments of the present invention.

The hydrogen water generator 10 according to various embodiments of the present invention comprises a sealing plate 200. In addition, the hydrogen water generator 10 may further include a seating surface 411, a moving part 600, and a first actuator 150.

The seating surface 411 forms a surface facing upward so that a water container 20 may be placed on the seating surface 411.

The water outlet 322 is located above the seating surface 411. A line in the vertical direction (Z direction) may pass through the water outlet 322 and the seating surface 411. That is, the vertical center line (second center line L2) passing through the water outlet 322 is aligned with the vertical center line (first center line L1) passing through the seating surface 411 (see FIG. 4A).

The sealing plate 200 may seal the opening 21 of the water container 20 when the hydrogen water is discharged into the water container 20, and thus, the loss of hydrogen from the discharged hydrogen water may be prevented. When the water container 20 and the sealing plate 200 are in contact with each other, the sealing plate 200 occupies a predetermined area along a horizontal plane (plane in the X-Y direction). The sealing plate 200 may be formed having a wide shape in the horizontal direction, and for example, the sealing plate 200 may be formed in a plate shape (see FIG. 5A).

The sealing plate 200 may be provided with a sealing surface 210, and the sealing surface 210 may form a close contact with the opening 21 of the water container 20. That is, the sealing surface 210 may seal the opening 21 of the water container 20. The sealing surface 210 may form a bottom of the sealing plate 200. The sealing surface 210 may form all or part of the bottom surface of the sealing plate 200.

The sealing surface 210 may seal various sizes of water containers 20 having openings 21 of various sizes, and also when the vertical center line (first center line L1) passing through the water container 20 and the vertical center line (second center line L2) passing through the water outlet 322 does not align (see FIG. 4B), the sealing surface 210 may have a shape wide enough such that if the water container 20 is seated within a predetermined area, the water container 20 may be sealed.

For example, referring to FIGs. 4A and 5A, an outer diameter d3 of the sealing surface 210 may be made larger than a diameter d1 of the opening 21 of the water container 20 being used. The outer diameter d3 of the sealing surface 210 may be determined in various ways depending on the user, the place used, the shape, the size, etc., of the water container 20 used.

For example, the outer diameter d3 of the sealing surface 210 may be made in a size of 50mm or more. The diameter of the outer diameter d3 of the sealing surface 210 may be made in a size in a range of 50mm∼300mm. Otherwise, the outer diameter d3 of the sealing surface 210 may be made in a size in a range of 70mm∼150mm.

The sealing plate 200 and/or the sealing surface 210 may have an outer edge having a polygonal shape or a circular shape. The sealing surface 210 may be flat or curved. The sealing surface 210 may be flexible. The sealing surface 210 may be made smooth overall. Protrusions or grooves may be formed on the sealing surface 210.

Referring to FIGs. 5A-5C, the sealing plate 200 may be formed over the entire circumferential area surrounding the water outlet 322. As shown in FIG. 5B, a coupling hole 220 penetrating in the vertical direction at the center of the sealing plate 200 may be formed, and the water outlet 322 may be provided in the coupling hole 220. The coupling hole 220 may be formed in the center of the sealing plate 200 and a water outlet pipe 321 including the water outlet 322 may be coupled to the sealing plate 200 at the coupling hole 220. The outlet pipe 321 may be fixedly coupled to the sealing plate 200, and hydrogen water may be discharged to the lower side of the sealing surface 210 through the water discharge pipe 321.

The sealing plate 200 may be a circular form around the second center line L2. The sealing plate 200 may be formed in a donut shape. The inner diameter d2 of the sealing plate 200 is smaller than the diameter d1 of the opening 21 of the water container 20 and the outer diameter d3 of the sealing plate 200 is larger than the diameter d1 of the opening 21 of the water container 20.

The sealing plate 200 may be made of an elastically deformable material. At least a part of the sealing plate 200 may be made of a material such as silicon or rubber. The sealing plate 200 may elastically deform in the external force direction at a point in which the external force is applied to the sealing surface 210.

The sealing plate 200 may be made of a single material, or may be formed by combining two or more different materials. At least a part of the sealing plate 200 may be made of metal, rubber, plastic, engineering plastic, or a combination thereof. An inner part 201 (center part) of the sealing plate 200 may be made of a relatively hard (rigid) material (such as metal or hard plastic, etc), and an outer part 202 of the sealing plate 200 may be made of a flexible (elastically deformable) material (such as rubber, soft plastic, etc).

Referring to FIG. 5C, an upper portion 203 of the sealing plate 200 may be made of a relatively hard (rigid) material, and a lower portion 204 of the sealing plate 200 may be made of a flexible (elastically deformable) material.

Referring to FIGs 6A-6B, 7A-7B, and 8A-8B, a hydrogen water generator 10 according to an embodiment of the present invention may include a sealing plate 200 where the sealing plate 200 spaced apart from an opening 21 of the water container 20 may come into contact with the opening 21 of the water container 20 by moving the sealing plate 200 or the seating surface 411. That is, the sealing plate 200 or the seating surface 411 may be movably coupled to a main body 100. For example, the sealing plate 200 or the seating surface 411 may be coupled to a moving part 600, and the moving part 600 may be movably coupled to the main body 100. The first actuator 150 may move the moving part 600.

For example, as illustrated in FIGs. 6A-6B, the sealing plate 200 may move up and down. In this case, a long guide rail (first guide rail 105) is provided on one side of the main body 100, and the sealing plate 200 and the first actuator 150 may move the moving part 600 along the long guide rail (first guide rail 105) in a up and down direction (Z direction).

As another example, as illustrated in FIGs. 7A-7B, the sealing plate 200 and the moving part 600 may rotatably move in an arc about an axis 106. In this case, one end of the sealing plate 200 and the moving part 600 is rotatably coupled to one side of the main body 100. The first actuator 150 may rotatably move the moving part 600.

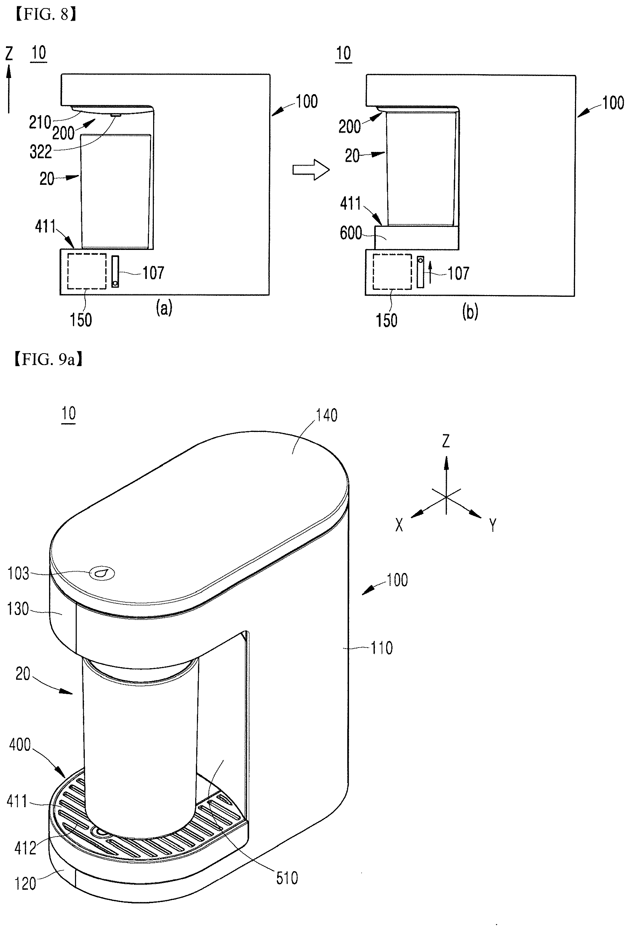

As another example, as illustrated in FIGs. 8A-8B, the seating surface 411 may move up and down. In this case, a long guide rail (second guide rail 107) is provided on one side of the main body 100, and the first actuator 150 may move the seating surface 411 and the moving part 600 along the long guide rail (second guide rail 107) in a up and down direction (Z direction).

In the hydrogen water generator 10 according to an embodiment of the present invention, the movement of the sealing plate 200 or the seating surface 411 with respect to the main body 100 may be made by an external force applied by the user. For example, the user may hold the sealing plate 200 or the seating surface 411 and move the sealing plate 200 or the seating surface 411 relative to the main body 100 or a configuration coupled thereto.

In the hydrogen water generator 10 according to another embodiment of the present invention, the movement of the sealing plate 200 or the seating surface 411 with respect to the main body 100 may be made by a force exerted by an first actuator 150 in the hydrogen water generator 10. That is, the first actuator 150 may be configured to directly move the sealing plate 200 or the seating surface 411 with respect to the main body 100. The sealing plate 200 may come in contact with the opening 21 of the water container 20 by the action of the first actuator 150, or may move toward the water container 20 so that the water outlet 322 comes close to the water container 20.

The first actuator 150 may be made from various types of devices for moving the sealing plate 200 or the seating surface 411. For example, the first actuator 150 may use a spring having an elastic force. Alternatively, a motor driven by electricity may be used.

The first actuator 150 may be configured to move the seating surface 411 or the sealing surface 210 so that the sealing surface 210 comes in contact with the opening 21 of the water container 20. For example, the first actuator 150 may be configured to move the seating surface 411 upward, or may be configured to move the sealing surface 210 (sealing plate 200) downward. Due to the action of the first actuator 150, relative displacement of the sealing surface 210 with respect to the water container 20 may occur.

In the hydrogen water generator 10 according to the embodiments of the present invention described above, since the opening 21 of the water container 20 is in contact with the sealing plate 200 during discharge of hydrogen water through the water outlet 322, the loss of hydrogen in the hydrogen water may be minimized.

In addition, since the hydrogen water is discharged in a state in which the opening of the water container 20 is in contact with the sealing surface 210, not only the sealing of the water container 20 but also the separation of the water container 20 from the sealing surface 210 may be made quickly and easily.

According to an embodiment of the present invention, the outer diameter is made larger than the diameter of the opening 21 of the water container 20 while the sealing plate 200 is formed in a shape surrounding the water outlet pipe 321 including the water outlet 322. The upper end of the water container 20 may be in contact with different points of the sealing surface 210, and in this state the sealing of the water container 20 may be made.

Accordingly, even if the center line (first center line L1) of the water container 20 and the center line (second center line L2) of the water outlet 322 do not exactly coincide with each other, the container 20 may be sealed. Therefore, even if various containers 20 having different opening sizes are used, the various water containers 20 may be sealed.

In the hydrogen water generator 10 according to an embodiment of the present invention, since the sealing plate 200 and the water outlet 322 may be moved up and down by the first actuator 150, when the user places the water container 20 under the water outlet 322 to receive the hydrogen water, the opening 21 of the water container 20 may be automatically sealed from the outside environment, and after discharge of the hydrogen water, the water container 20 may be automatically released.

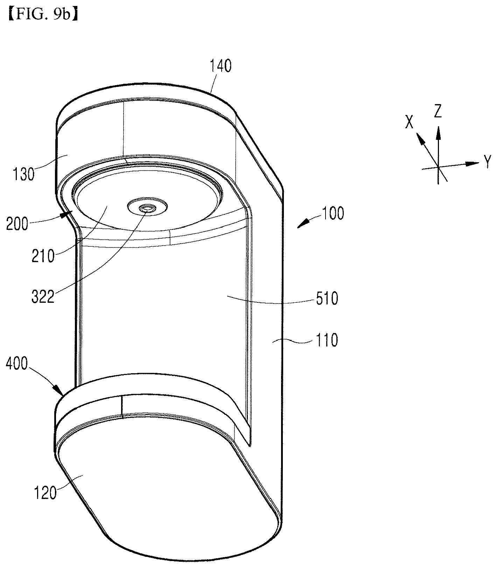

FIG. 9A is a perspective view showing a state of use of the hydrogen water generator 10 according to another embodiment of the present invention, and FIG. 9B is a bottom perspective view of the hydrogen water generator 10 shown in FIG. 9A.

A main body 100 may be provided with an operation button 103 for operating the hydrogen water generator 10, and the user may operate the hydrogen water generator 10 by pressing the operation button 103. The operation button 103 may be part of a configuration of an input unit to be described later. The main body 100 may include a center body 110, a lower body 120, and an upper body 130. The center body 110 forms a central portion of the main body 100. The lower body 120 extends forward (X direction) from a bottom part of the center body 110 to protrude forward, and the upper body 130 extends forward (X direction) from a top part of the center body 110 to protrude forward. A length in which the lower body 120 protrudes forward with respect to the center body 110 may be similar to, the same as, or greater than a length in which the upper body 130 protrudes forward with respect to the center body 110. Accordingly, the main body 100 may achieve a structure that is stable. By having such a structure, the main body 100 may form a C shape that is generally opened at the front when viewed from the side.

In the hydrogen water generator 10 according to the embodiment of the present invention, a seating part 400 may be formed on an upper side of the lower body 120. The seating part 400 may be formed integrally with the lower body 120 or may be separately formed. An upper surface of the seating part 400 may form the seating surface 411 described above. The seating part 400 is where the water container 20 may be placed and protrudes forward from the lower end of the water tank 510, and the upper surface is made flat.

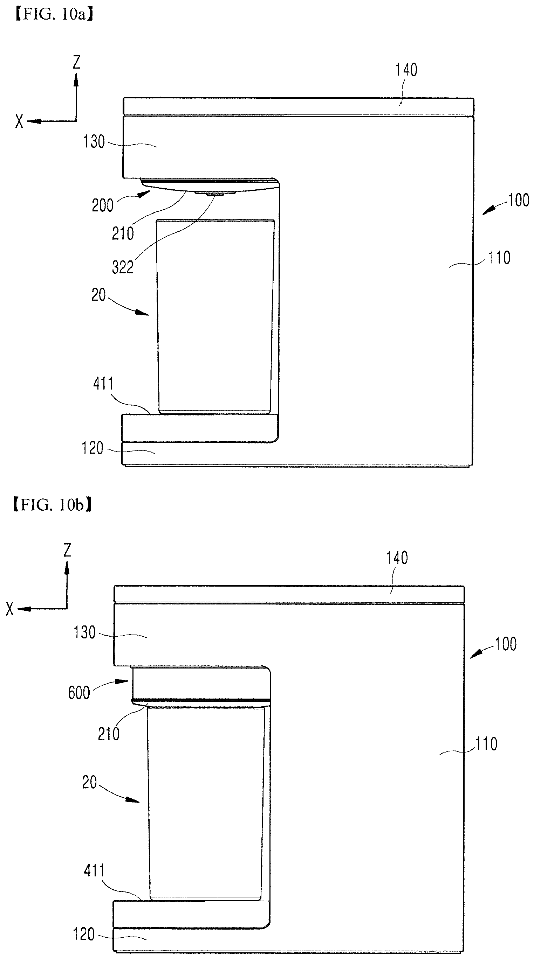

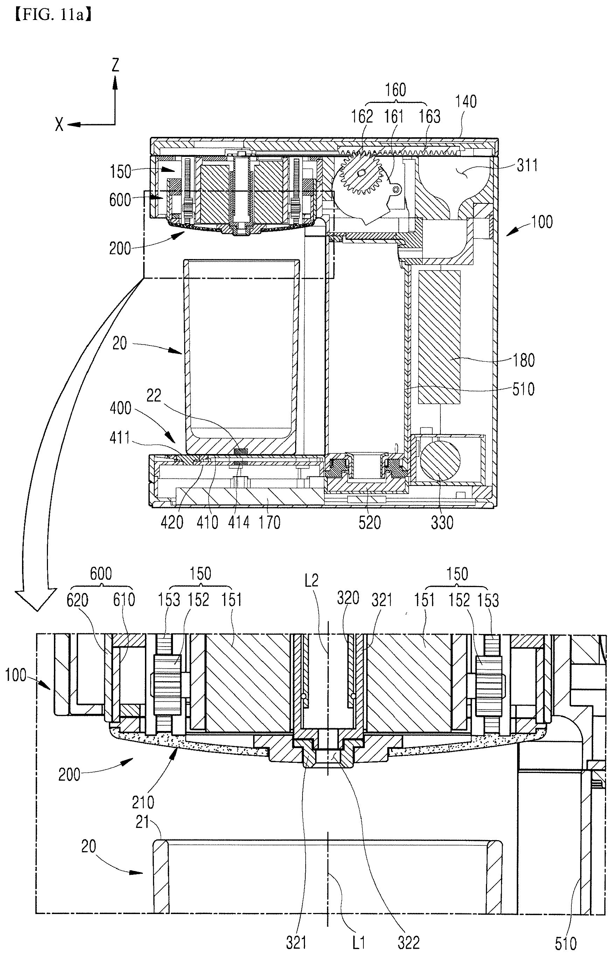

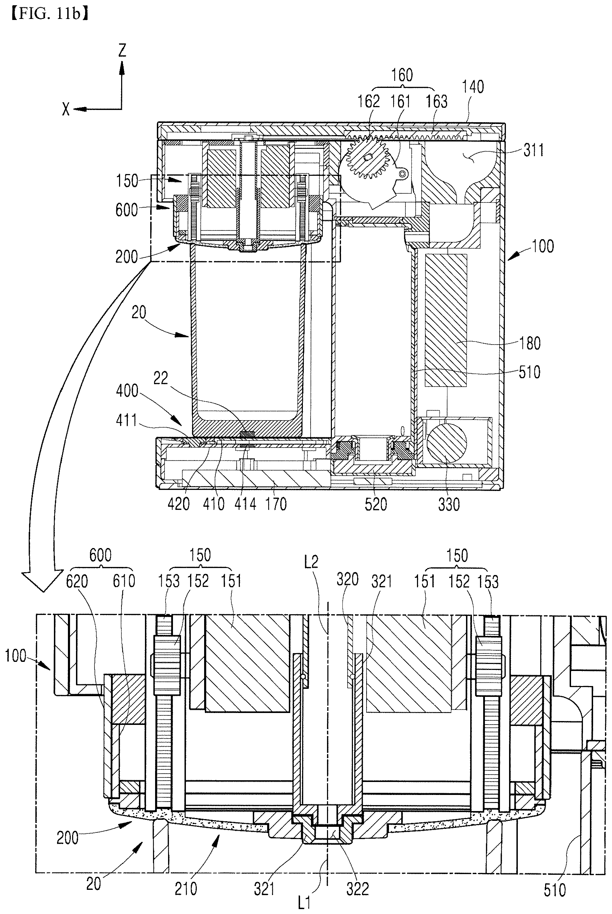

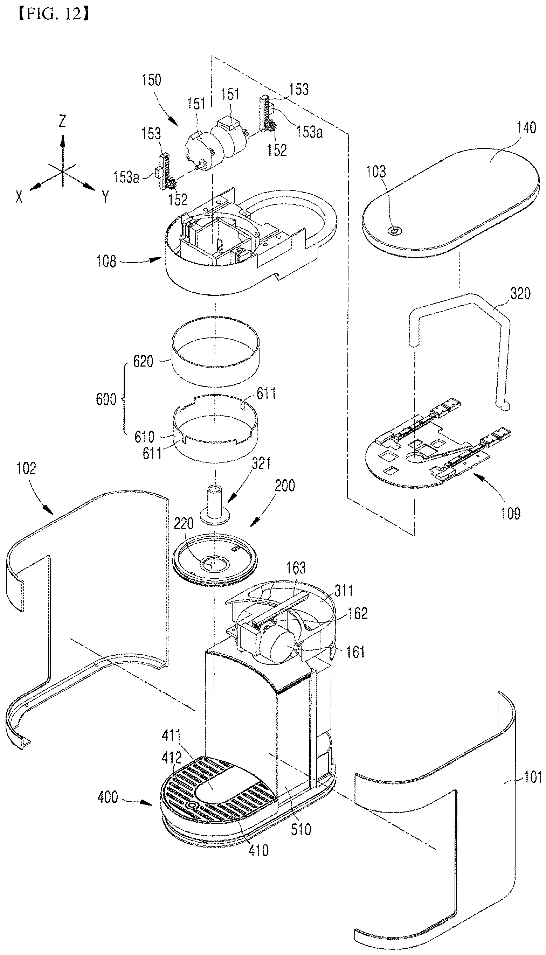

FIGs. 10A and 10B are side views showing states of use and operation of the hydrogen water generator 10 shown in FIG. 9A, FIGs. 11A and 11B are side cross-sectional views including partial enlarged views showing states of use and operation of the hydrogen water generator 10 shown in FIG. 9A, and FIG. 12 is an exploded perspective view showing the hydrogen water generator 10 shown in FIG. 9A.

The seating part 400 described above may include a seating panel 420 and a seating plate 410. The seating plate 410 is seated on an upper surface of the seating panel 420. The seating plate 410 forms a seating surface 411 on which the water container 20 may be placed. The seating plate 410 may be provided with a plurality of holes 412 through which water may pass down. Thus, when water is accidentally spilled on the seating plate 410, the water may be collected in the seating panel 420 through the holes 412 of the seating plate 410.

The main body 100 may include a housing 101 and 102 forming an external appearance, and a frame 108 and a panel 109 that are fixed to the housing 101 and 102. The main body 100 may include a first actuator 150, a second actuator 160, a controller 180, and a battery 170. The controller may be a microprocessor, an electrical circuit, an integrated circuit, an electrical logic circuit, etc. Some portions of the first actuator 150 and the second actuator 160 may be fixed to the frame 108. The main body 100 may include an input unit and an output unit.

The input unit may include an operation button 103. While one operation button 103 is shown, the hydrogen water generator may include several operation buttons 103 to allow the user to input various operation commands. The operation button 103 may be a touch key or a mechanical key. In other embodiments, the input unit may include at least one of an image input unit, a microphone or an audio input unit for inputting an audio signal for receiving information from a user.

The output unit, for example, may generate an output related to at least one of visual, auditory, or tactile, and may include at least one of a display unit, an audio output unit, a haptic module, and an optical output unit.

The controller 180 may control the overall operation of the hydrogen water generator 10. The controller 180 may receive input from the input unit and send information to the output unit. The controller 180 may control the operation of the first actuator 150 and the second actuator 160. The operation of the first actuator 150 and the second actuator 160 will be further described below. The controller 180 may control the operation of the electrode module 520 and the water pump 330, among others.

The battery 170 may supply power to the electrode module 520, the water pump 330, the controller 180, the first actuator 150, and the second actuator 160, among others. When the battery 170 is not provided in the hydrogen water generator 10, the electrode module 520, the water pump 330, the controller 180, the first actuator 150 and the second actuator 160, and other units or modules that require electrical power may receive power directly from an external power source provided to the hydrogen water generator 10.

Hydrogen water generator 10 according to the embodiment of the present invention may include a moving part 600 and a top plate 140. The water inlet 311 may be opened and closed by the top plate 140. The top plate 140 may slide back and forth by operation of the second actuator 160 to open and close the water inlet 311. The second actuator 160 may include a second motor 161, a second pinion 162, and a second rack 163.

The second motor 161 may be coupled to the inside of the main body 100, and may be coupled to the inside of the upper body 130. The second pinion 162 may be coupled to the shaft of the second motor 161. The second pinion 162 may, for example, be a pinion gear, and the rotational axis of the second pinion 162 may be parallel to the left-right direction (Y direction). The second rack 163 may be integrally formed to the bottom of the top plate 140 or may be coupled to the bottom of the top plate 140, and teeth may be formed along the lower surface in the front-back direction (X direction) to engage with the second pinion 162.

When the second pinion 162 is rotated by the second motor 161, the second rack 163 moves forward and backward and the upper plate 140 coupled with the second rack 163 opens or closes the water inlet 311.

Referring to FIG. 11A, a sealing plate 200 is formed around the water outlet 322, and the moving part 600 is disposed above the edge of the sealing plate 200.

The moving part 600 is coupled to the lower side of the upper body 130. In particular, the moving part 600 may be movably coupled to the upper body 130 so as to move up and down from the upper body 130. The sealing plate 200 may be fixedly coupled to the lower end of the moving part 600.

The first actuator 150 may operate to reciprocate the moving part 600 in the vertical direction (Z direction), and the water outlet 322 and the sealing plate 200 are coupled to the moving part 600 to move up and down with the moving part 600. When the moving part 600 is lowered, the sealing plate 200 is made to seal the opening 21 of the water container 20.

The moving part 600 may be formed in a cylindrical shape as a whole. The moving part 600 may be raised by the operation of the first actuator 150 to be inserted into the upper body 130, and may be lowered by the operation of the first actuator 150 to be exposed outside of the upper body 130. The outer surface of the moving part 600 may form a relatively small gap with the upper body 130. An O-ring may be interposed to seal the gap between the outer surface of the moving part 600 and the upper body 130.

The moving part 600 may include an inner moving part 610 and an outer moving part 620. The inner moving part 610 and the outer moving part 620 may each have a cylindrical shape. The inner moving part 610 forms the skeleton to which the sealing plate 200 and the water outlet pipe 321 may be coupled. The inner moving part 610 may be made by injection molding. The outer moving part 620 may be coupled to the outer surface of the inner moving part 610. The outer moving part 620 may be made of a metallic material with precision machined surface to improve aesthetics when the moving part 600 descends and the outer moving part 620 is visible.

A water outlet pipe 321 is configured to include the water outlet 322, and the hydrogen water is discharged in the direction of gravity through the water outlet 322.

The water outlet pipe 321 may be coupled to a pipeline 320 inside the moving part 600. The end portion of the pipeline 320 through which the hydrogen water flows is inserted into the water outlet pipe 321 and remains inserted in the water outlet pipe 321 during the movement of the moving part 600. An O-ring may be interposed between the pipeline 320 and the water outlet pipe 321.

Referring to FIGs. 11A and 11B, the first actuator 150 may move the moving part 600 coupled with the water outlet 322 and the sealing plate 200, and includes the first motor 151, a first pinion 152, and a first rack 153.

The first motor 151 may be coupled to the main body 100, and may be coupled to the upper body 130. The first pinion 152 may be a pinion gear and is coupled to the shaft of the first motor 151. The rotation axis of the first motor 151 may be in parallel with the horizontal direction (perpendicular to Z direction). The first rack 153 may be coupled to the moving part 600.

To couple the first rack 153 to the moving part 600, a protrusion 153a protruding toward the inner moving part 610 may be formed on the first rack 153, and the inner moving part 610 has a groove 611 to which the protrusion 153a may be fitted and coupling may be formed.

The first rack 153 is formed in an elongated shape in the longitudinal direction (Z direction) and a teeth are formed along the surface to engage with the first pinion 152. When the first motor 151 rotates, the first rack 153 moves up or down together with the moving part 600.

As shown in FIGs. 11A and 11B, an edge portion of the sealing plate 200 may be coupled to a lower end portion of the first rack 153. The edge portion of the sealing plate 200 may be additionally supported by the first rack 153 to suppress sagging due to its own weight. The lower end of the first rack 153 may prevent excessive deformation of the sealing plate 200 when the sealing plate 200 is in contact with the periphery of the opening 21 of the water container 20. A torque limiter may be installed at the rotational shaft of the first motor 151 to prevent an overload of the first motor 151.

As shown in FIGs. 10B and 11B, when the moving part 600 descends, the sealing plate 200 is in contact with the periphery of the opening 21 of the water container 20. When the sealing plate 200 is in contact with the circumference of the opening 21 of the water container 20, the inside of the water container 20 is sealed except for the water outlet 322. That is, when the sealing plate 200 is in contact with the periphery of the opening 21 of the water container 20, the inside of the water container 20 is in communication with the water outlet 322, otherwise the inside of the water container 20 is sealed from outside environment.

Therefore, hydrogen remains trapped in the hydrogen water contained in the water container 20, and any hydrogen that may escape from the water container 20 may escape only through the water outlet 322. One side of the pipe line 320 may be provided with a check valve to discharge the hydrogen gas when the excessive pressure builds inside the water container 20.

FIG. 11A shows a state in which the water container 20 is placed on the seating surface 411 so that the first center line L1 and the second center line L2 are aligned.

The user may select an amount of hydrogen water to be discharged through the input unit. Alternatively, the controller 180 may determine an amount of hydrogen water to be discharged. When the user presses the operation button 103, the controller 180 operates the first actuator 150 and the water pump 330 in order. That is, when the user presses the operation button 103, the moving part 600 descends and the sealing plate 200 comes into contact with the periphery of the opening 21 of the water container 20. Thereafter, the water pump 330 may discharge a predetermined amount of hydrogen water, and the hydrogen water fills in the water container 20. Since the water container 20 is located directly below the water outlet 322, the sealing plate 200 forms a firm adhesion along the circumference of the opening 21 of the water container 20 and seals the water container 20.

The sealing plate 200 is made elastically deformable, and when the moving part 600 is lowered and the sealing plate 200 is in contact with the opening 21 of the water container 20, the sealing plate 200 may undergo elastic deformation. The sealing plate 200 forms an elastic recovery force while being in contact with the opening 21 of the water container 20.

The elastic recovery force of the sealing plate 200 forms a force to push the water container 20 down. Therefore, when the moving part is lowered, moving of water container 20 caused by an external force is prevented, and the water container 20 is sealed more effectively.

When the user presses the operation button 103 again after the water container 20 is filled with hydrogen water, the controller 180 operates the first actuator 150 to raise the sealing plate 200, and the user may lift the water container 20 from the hydrogen water generator 10 and drink the hydrogen water immediately.

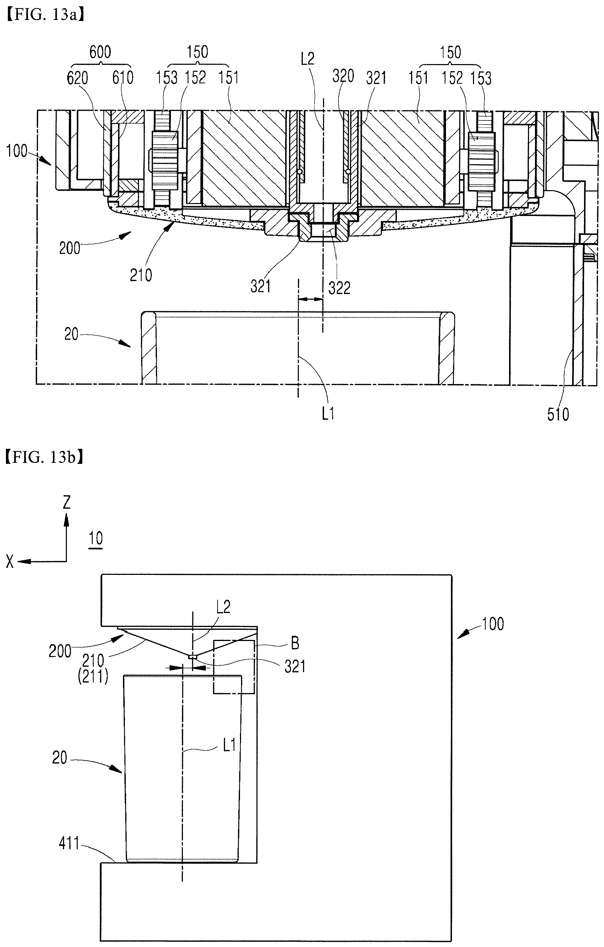

FIG. 13A is a side cross-sectional view showing another state of use of a portion of the hydrogen water generator 10 according to another embodiment of the present invention, and FIG. 13B is a side view showing the hydrogen water generator 10 according to another embodiment of the present invention. FIGs. 13A and 13B show a state where the center line (first center line L1) of the water container 20 and the center line (second center line L2) of the water outlet 322 do not align with each other.

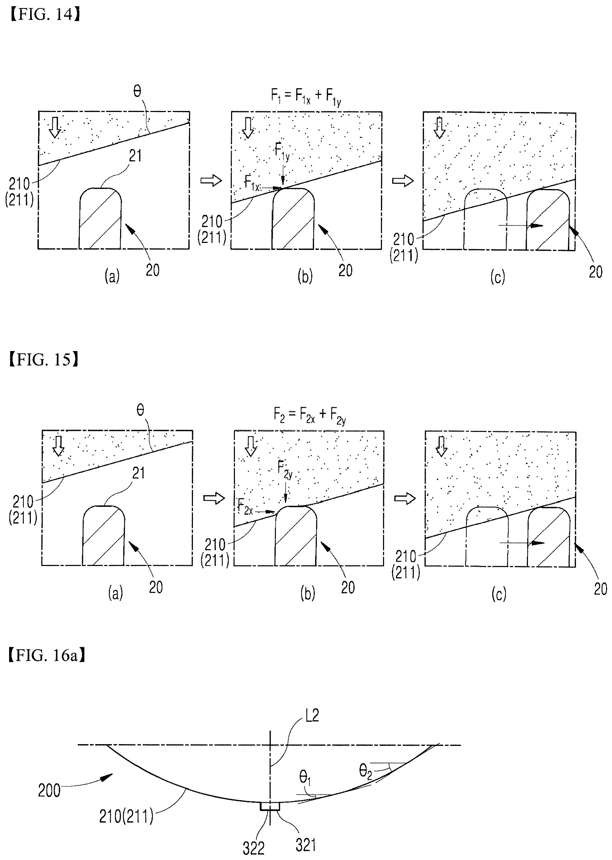

FIGs. 14A, 14B, and 14C are cross-sectional views for explaining an action between the sealing plate 200 and the water container 20 in the portion indicated by B of Figure 13B, and FIGs. 15A, 15B, and 15C are cross-sectional views for explaining the movement of the water container 20 with respect to the sealing plate 200 of the hydrogen water generator 10 according to another embodiment of the present invention.

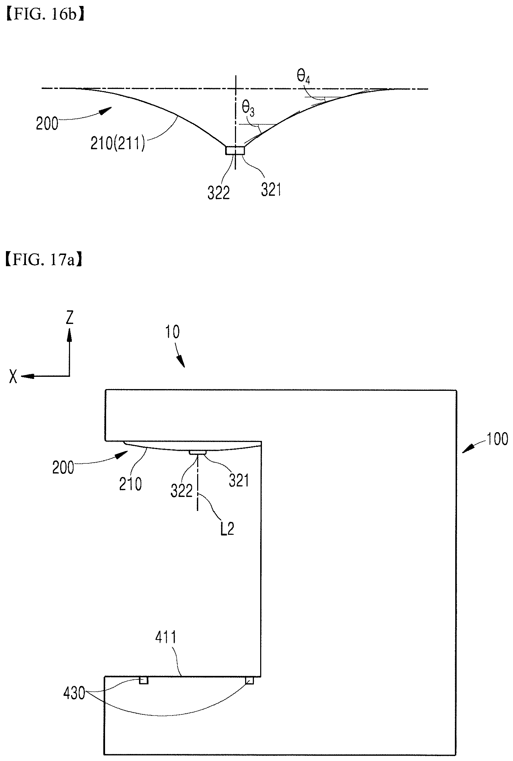

FIGs. 16A and 16B are side views showing a sealing plate 200 according to another embodiment of the present invention.

In the hydrogen water generator 10 according to the embodiment of the present invention, the water container 20 may be made to move in the direction where the first center line L1 of the water container 20 and the second center line L2 of the water outlet 322 are made to align with each other. To this end, the sealing surface 210 of the sealing plate 200 comprises an inclined surface 211.

Referring to FIG. 16A, the inclined surface 211 may have a steeper slope as it moves away from the water outlet 322 and may be formed over the circumferential direction centered around the water outlet 322. The inclined surface 211 may form all or part of the sealing surface 210.

Referring to FIG. 16B, by the inclined surface 211, the sealing surface 210 of the sealing plate 200 may form a tapered shape in the direction toward the lower side, and may form a reversed cone shape.

In the embodiment of the present invention, the inclined surface 211 may form different inclined angles θ at various points with respect to a horizontal surface.

As shown in FIGs. 13A and 13B, the bottom surface of the sealing plate 200 forms a shape that incrementally spaces apart from the upper end of the water container 20 in the vertical direction (Z direction) as it moves away from the water outlet pipe 321.

In the state where the first center line L1 of the water container 20 and the second center line L2 of the water outlet 322 do not coincide with each other, as the sealing plate 200 including the inclined surface 211 descends, the inclined surface 211 may make contact with one of the sides of the water container 20. The sealing plate 200, and in particular, the inclined surface 211 being made of a hard material, may be in linear contact with the upper end of the water container 20, and may contact the inner side of the opening 21 of the water container 20 (see FIG. 14B).

The inclined surface 211 applies a force (hereinafter, 'contact force F1') to the opening 21 of the water container 20 at the point of contact with the water container 20. The contact force F1 may be divided into a horizontal component F1x and a vertical component F1y.

If the sealing plate 200 is lowered further, the contact force F1 may increase, and when the horizontal component F1x of the contact force F1 is greater than the frictional force at the bottom of the water container 20 (for example, the frictional force between the water container 20 and the seating surface 411), the movement of the water container 20 occurs.

Therefore, the horizontal component F1x of the contact force F1 may be directed from the inside of the water container 20 toward the outside, and the water container 20 may slide and be moved by the horizontal component F1x of the contact force F1. (See FIG. 14C).

The water container 20 may be continuously pushed by the contact force F1 of the sealing plate 200 until the lowering of the moving part 600 is completed. The water container 20 may be moved by the horizontal component F1x of the force to a state where the first center line L1 of the water container 20 and the second center line L2 of the water outlet 322 align with each other.

In order to smoothly move the water container 20 by the inclined surface 211, the seating surface 411 may be made of a material having a low frictional force in relation to the water container 20. For example, at least a portion of the seating surface 411 may be made of engineering plastics such as acetal. As another example, a plurality of holes 412 may be formed in the seating surface 411.

As shown in FIG. 16A, the sealing surface 210 constituting the bottom surface of the sealing plate 200 may be inclined upward as the distance from the water outlet 322 decreases, and may include an inclined surface 211 of a downward curved convex shape. When the tangent (or tangent plane) of the inclined surface 211 forms the inclination angle (θ) with the horizontal plane, the angle of inclination (θ2) of the tangent (or tangent plane) at a point far away from the water outlet 322 is made larger than the inclination angle (θ1) of the tangent (or tangent plane) at a point relatively close to the water outlet 322. Therefore, when the sealing surface 210 contacts the opening 21 of the water container 20 at a point relatively far from the water outlet 322, the horizontal component F1x of the force exerted by the sealing surface 210 on the water container 20 may be relatively large, thereby a sealing plate 200 capable of moving the water container 20 may be formed.

As shown in FIG. 16B, in another embodiment, the sealing surface 210 forming the bottom surface of the sealing plate 200 may be inclined toward the upper side the further away from the outlet 322, and may be made by including an inclined surface 211 of the upward curved concave shape. When the tangent (or tangent plane) of the inclined surface 211 forms the inclination angle θ with the horizontal plane, the inclination angle (θ3) of the tangent (or tangent plane) at a point relatively close to the water outlet 322 is made larger than the inclination angle (θ4) of the tangent (or tangent plane) at a point far away from the water outlet 322. Therefore, when the sealing surface 210 comes into contact with the opening 21 of the container 20 at a point relatively close to the outlet 322, the horizontal component F1x of the force exerted by the sealing surface 210 on the container 20 may be relatively large, thereby a sealing plate 200 capable of moving the water container 20 may be formed.

In the state where the first center line L1 of the water container 20 and the second center line L2 of the water outlet 322 do not coincide with each other, and the sealing plate 200 including the inclined surface 211 descends, the inclined surface 211 may make contact with one of the sides of the water container 20. When the part of the sealing plate 200, especially the inclined surface 211 is made of an elastically deformable material, the inclined surface 211 may be in linear contact with the upper end of the water container 20, and may contact the inner side of the opening 21 of the water container 20 (see FIG. 15B).

At this time, the contact surface is made wider inside the water container 20 than the outside of the water container 20.

The inclined surface 211 stores a force (hereinafter, 'elastic recovery force F2') while elastically deforming, and the elastic recovery force F2 is applied to the water container 20 at the contact surface with the water container 20. The elastic recovery force F2 may be divided into a horizontal component F2x and a vertical component F2y.

FIG. 15B shows a state in which the sealing plate 200 contacts a part of the opening 21 of the water container 20. In this state, the sealing plate 200 starts to apply a horizontal elastic recovery force to a portion of the opening 21 of the container 20. In FIG. 15B, the direction in which the sealing plate 200 applies the horizontal elastic recovery force to the opening 21 of the container 20 is a direction in which the first center line L1 of the water container 20 faces the second center line L2 of the water outlet 322. The horizontal elastic recovery force forms a force for pushing the water container 20 in the horizontal direction.

Accordingly, the horizontal component F2x of the elastic recovery force F2 is directed from the inside of the water container 20 to the outside, and when the horizontal component F2x of the elastic recovery force F2 is greater than the frictional force of the bottom of the water container 20 (for example, the frictional force between the water container 20 and the seating surface 411), the water container 20 is moved on the seating surface 411 by the horizontal component F2x of the elastic recovery force F2 by sliding.

The aforementioned contact force F1 and elastic recovery force F2 may act together on the water container 20.

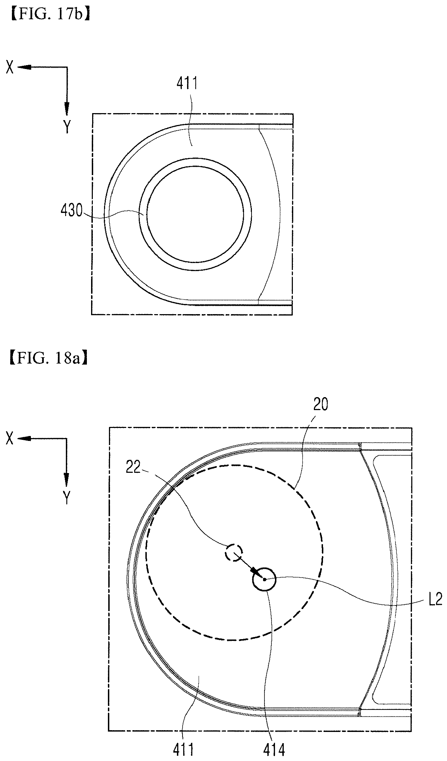

FIG. 17A is a side view showing a hydrogen water generator 10 according to another embodiment of the present invention, and FIG. 17B is a plan view showing the seating surface 411 at the hydrogen water generator 10 of FIG. 17A.

Hydrogen water generator 10 according to an embodiment of the present invention may further comprise a light emitter 430. The light emitter 430 is formed along the circumferential direction with respect to the second center line L2 of the water outlet 322 on the seating surface 411 and is configured to emit light upward. The light emitter 430 may be formed with light emitting diodes (LEDs) or lasers, etc.

In the embodiment of the present invention, the light emitted by the light emitter 430 may form a circle around the second center line L2 of the water outlet 322, and the user may place the water container 20 in a position that is within the circle, for example.

For example, the light emitted by the light emitter 430 may be used for guiding the user so that the first center line L1 of the water container 20 and the second center line L2 of the water outlet 322 may coincide with each other. Accordingly, the user may easily place the water container 20 at a position where the first center line L1 of the water container 20 and the second center line L2 of the water outlet 322 coincide with each other, and in the hydrogen water generator 10 according to the embodiment of the present invention, the sealing of the water container 20 at the time of discharge of hydrogen water may be made more effectively.

FIG. 18A is a view explaining an action between the seating surface 411 and the water container 20 (shown as a dashed circle) at the hydrogen water generator 10 according to another embodiment of the present invention.

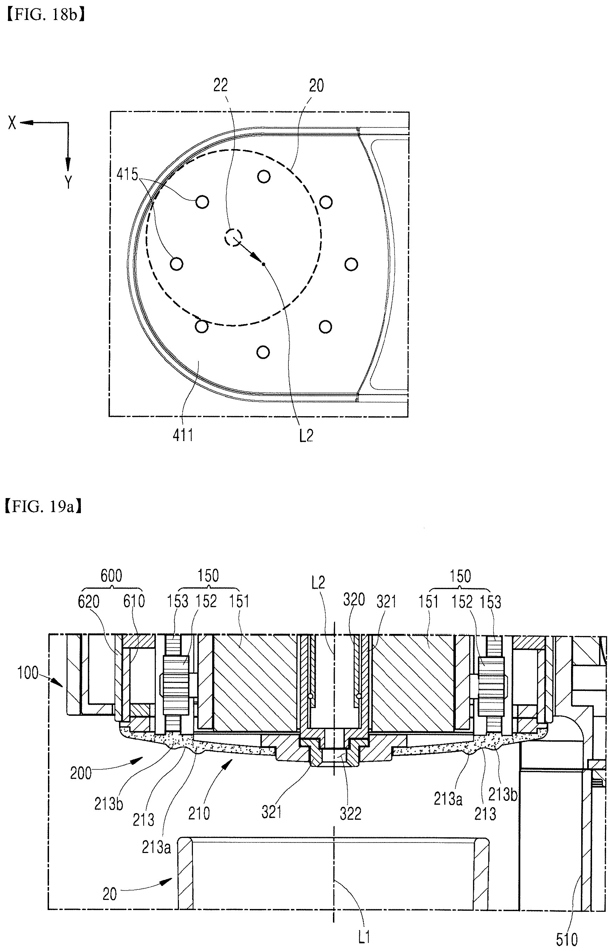

FIG. 18B is a view explaining an action between the seating surface 411 and the water container 20 (shown as a dashed circle) at the hydrogen water generator 10 according to another embodiment of the present invention.

In the hydrogen water generator 10 according to the embodiments of the present invention, for the first center line L1 of the water container 20 and the second center line L2 of the water outlet 322 to coincide with each other, a first magnetic body 22 and a second magnetic body 414 may be used.

The first magnetic body 22 may be provided at the bottom center of the water container 20. The second magnetic body 414 may be provided on the seating surface 411, and may be positioned to coincide with the second center line L2 of the water outlet 322, and may be configured to act as an attraction force to the first magnetic body 22. Both the first magnetic body 22 and the second magnetic body 414 may be made of a magnet (permanent magnet or electromagnet), or one may be made of a magnet and the other may be made of a metal which may be attracted by a magnet.

In a position where the first center line L1 of the water container 20 and the second center line L2 of the water outlet 322 do not coincide with each other when the user places the water container 20 on the seating surface 411, by the attraction force between the first magnetic body 22 and the second magnetic body 414, the container 20 may move in the direction in which the first center line L1 of the water container 20 and the second center line L2 of the water outlet 322 will coincide with each other. Accordingly, the sealing of the water container 20 by the sealing plate 200 (sealing surface 210) may be made stably and effectively.

In the hydrogen water generator 10 according to the embodiment of the present invention, when the inclined surface 211 of the sealing surface 210 is provided together with the first magnetic body 22 and the second magnetic body 414, the movement of the water container 20 in the direction in which the first line L1 of the water container 20 and the second center line L2 of the water outlet 322 coincide with each other may be made more effectively.

Referring to FIG. 18B, in the hydrogen water generator 10 according to the embodiment of the present invention, for the center line L1 of the water container 20 and the center line L2 of the water outlet 322 to coincide with each other, the first magnetic body 22 and a third magnetic body 415 may be included.

The third magnetic body 415 is provided on the seating surface 411. The third magnetic body 415 may be provided in plurality and provided along the circumferential direction around the second center line L2 passing through the water outlet 322, and may be configured to act on the first magnetic body 22 as a repulsive force. Both the first magnetic body 22 and the third magnetic body 415 may be made of a magnet (permanent magnet or electromagnet).

Even when the user places the water container 20 on the seating surface 411 in a position where the first center line L1 of the water container 20 and the second center line L2 of the water outlet 322 do not coincide, due to the repulsive force between the first magnetic body 22 and the third magnetic body 415, the water container 20 may be naturally pushed and moved in the direction in which the first center line L1 of the water container 20 and the second center line L2 of the water outlet coincide with each other. Accordingly, the sealing of the water container 20 by the sealing plate 200 (sealing surface 210) may be made stably and effectively.

In the hydrogen water generator 10 according to the embodiment of the present invention, when the inclined surface 211 of the sealing surface 210 is provided together with the first magnetic body 22 and the third magnetic body 415, the movement of the water container 20 in the direction in which the first line L1 of the water container 20 and the second center line L2 of the water outlet 322 coincide with each other may be made more effectively.

Furthermore, in the hydrogen water generator 10 according to the embodiment of the present invention, when the inclined surface 211 of the sealing surface 210 is provided with the first magnetic body 22, the second magnetic body 414, and the third magnetic body 415, the movement of the water container 20 in the direction in which the first center line L1 of water container 20 and the second center line L2 of the water outlet coincide with each other may be made more effectively.

A plurality of holes 412 penetrating the seating surface 411 in the vertical direction may be formed. By forming the plurality of holes 412 in the seating surface 411, it may be possible to reduce the friction force acting between the water container 20 and the seating surface 411. The movement of the water container 20 to coincide with the first center line L1 of the water container 20 and the second center line L2 of the water outlet 322 may be more easily performed by the sliding movement of the water container 20 on the seating surface 411.

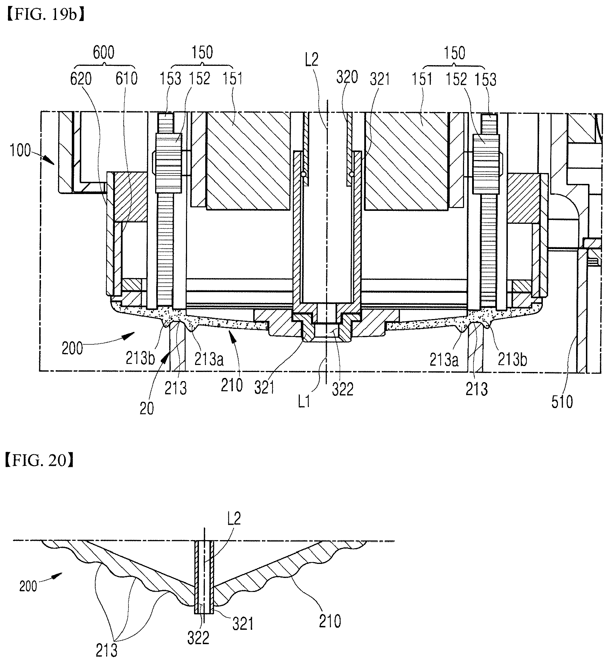

FIGs. 19A and 19B are side cross-sectional views showing a state of use of a portion of the hydrogen water generator 10 according to another embodiment of the present invention.

FIG. 20 is a side cross-sectional view schematically illustrating the sealing plate 200 according to another embodiment of the present invention.

In the hydrogen water generator 10 according to the embodiment of the present invention, the sealing plate 200 may include a groove 213. The groove 213 may be formed in a concave groove shape on the sealing surface 210 and may be formed in the entire circumferential direction around the water outlet 322. That is, one groove 213 may be formed in a circular shape surrounding the water outlet 322. An upper edge of the water container 20 may be inserted into the groove 213 of the sealing plate 200.

A plurality of protrusions 213a and 213b may be formed on the bottom surface of the sealing plate 200. The plurality of protrusions 213a and 213b may be formed along the circumferential direction with respect to the second center line L2 of the water outlet 322, respectively. The groove 213 may be formed between the protrusions 213a and 213b. When the groove 213 is formed in the sealing plate 200, the contact area between the water container 20 and the sealing plate 200 increases, and the hydrogen gas escaping from the water container 20 may be firmly blocked.

Referring to FIG. 20, the sealing surface 210 may be provided with a plurality of grooves 213 having different diameters. Accordingly, even when various water containers 20 having different diameters of the openings 21 are used, the various water containers 20 may be effectively sealed by the sealing plate 200.

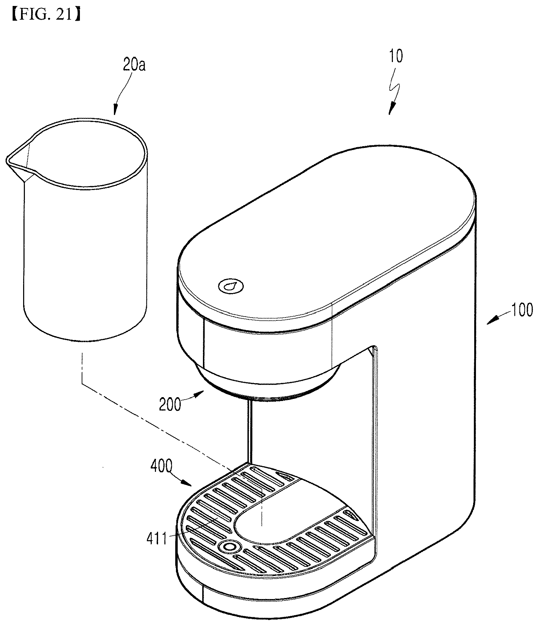

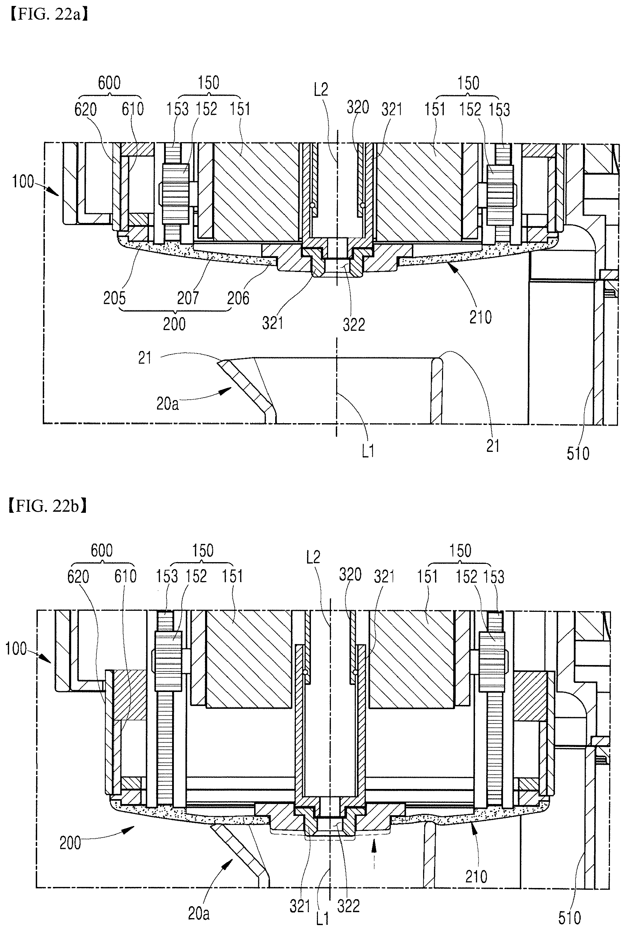

FIG. 21 is a perspective view showing another kind of water container 20a being used at the hydrogen water generator 10 according to another embodiment of the present invention, and FIGs 22A and 22B are side cross-sectional views showing a state of use of a part of the hydrogen water generator shown in FIG. 21.

In the hydrogen water generator 10 according to the embodiment of the present invention, the sealing plate 200 may be elastically deformed in the external force direction at the point where the external force is applied when the external force is applied in the direction toward the sealing surface 210. That is, when an external force is applied on either side of the sealing surface 210, the elastic deformation of the sealing plate 200 may be made only at the portion to which the external force is applied.

As illustrated in FIGs. 22A and 22B, in the hydrogen water generator 10 according to the embodiment of the present invention, even when the water container 20a is asymmetrical and have a height difference around the first center line L1 of the water container 20a, when the moving part 600 descends, the inside of the water container 20 may be sealed.

The sealing plate 200 may be divided into a peripheral portion 205, a central portion 206, and a connection portion 207.

The peripheral portion 205 may form an outer edge portion of the sealing plate 200 and may be coupled to the moving part 600, the central portion 206 may form an inner portion of the sealing plate 200 and may be coupled to the outlet pipe 321, and the connecting portion 207 may form a portion connecting the peripheral portion 205 and the central portion 206.

The connecting portion 207 may be made elastically deformable in the vertical direction (Z direction) between the peripheral portion 205 and the central portion 206. The connecting portion 207 may be elastically deformable in the vertical direction with respect to the peripheral portion 205 and the central portion 206.

The water outlet pipe 321 may be configured to reciprocate in the vertical direction with respect to the peripheral portion 205.

As illustrated in FIGs. 22A and 22B, when the moving part 600 descends and the connection part 207 is in contact with the opening 21 of the water container 20a, the connection part 207 may be elastically compressed at one portion.

The central portion 206 may be the portion connected to the water outlet pipe 321. The central portion 206 may be fixedly coupled to the water outlet pipe 321.

As illustrated in FIGs. 22A and 22B, when the moving part 600 descends and the connection part 207 comes into contact with the opening 21 of the container 20a, the connection part 207 may be pushed upward by deflection due to the opening 21 of the container 20a, and the central portion 206 may move upward with the connecting portion 207.

Accordingly, a more natural bending deformation of the connecting portion 207 may be achieved, and even when the opening 21 of the container 20a is asymmetrical and has a height difference, the contact plate 200 may adapt to the shape of the opening 21 of the container 20a resulting in close contact through bending deformation.

As illustrated in FIG. 22B, the water outlet pipe 321 may be lifted by the movement or elastic deformation of the central portion 206 to rise relative to the moving portion 600 and the peripheral portion 205. Therefore, the water outlet pipe 321 forms a constant height difference with the upper end of the opening 21 even though the opening 21 is asymmetrical or has a height difference. When the water outlet pipe 321 forms a constant height difference with the upper end of the opening 21, the phenomenon that the water outlet pipe 321 is in contact with the hydrogen water filled in the container 20 may be prevented.

## Claims

1. A hydrogen water generator comprising:
a water tank (510) for receiving and storing water;
an electrode module (520) coupled to the water tank (510), and configured to generate hydrogen water in the water tank (510);
a water outlet pipe (321);
a pump (330) for pumping the hydrogen water stored in the water tank (510) to one end of the water outlet pipe (321);
a water outlet (322) disposed at an other end of the water outlet pipe (321);
a sealing plate (200) coupled to the water outlet (322);
a moving part (600); and
an actuator (150) to move the moving part (600) so that the sealing plate (200) closes an opening of a water container (20).

2. The hydrogen water generator of claim 1, wherein the sealing plate (200) is elastically deformable to elastically deform in an external force direction at a point where the external force is applied at the sealing plate (200).

3. The hydrogen water generator of claim 1 or 2, wherein the sealing plate (200) includes a center part (201) and an outer part (202) surrounding the center part (201), the center part (201) is a rigid material and the outer part (202) is a flexible material.

4. The hydrogen water generator of any one of claims 1 to 3, wherein the sealing plate (200) includes an upper part (203) and a lower part (204) covering a lower surface of the upper part (203), the upper part (203) is a rigid material and the lower part (204) is a flexible material.

5. The hydrogen water generator of any one of claims 1 to 4, wherein the sealing plate (200) includes an inclined surface (211) on at least a portion of the sealing plate (200), the inclined surface (211) formed over a circumferential direction centered around the water outlet (322), an angle of inclination of a tangent of the inclined surface (211) at a point farther away from the water outlet (322) is larger than the tangent of the inclined surface (211) at a point closer to the water outlet (322).

6. The hydrogen water generator of any one of claims 1 to 5, wherein the sealing plate (200) includes an inclined surface (211) on at least a portion of the sealing plate (200), the inclined surface (211) formed over a circumferential direction centered around the water outlet (322), an angle of inclination of a tangent of the inclined surface (211) at a point closer from the water outlet (322) is larger than the tangent of the inclined surface (211) at a point farther away to the water outlet (322).

7. The hydrogen water generator of any one of claims 1 to 6, wherein at least one groove (213) is formed on the sealing plate (200) corresponding to the opening of the water container (20).

8. The hydrogen water generator of any one of claims 1 to 7, wherein at least one protrusion is formed on the sealing plate (200) corresponding to the opening of the water container (20).

9. The hydrogen water generator of any one of claims 1 to 8, wherein the sealing plate (200) is coupled to an end of the moving part (600), and the actuator (150) is configured to move the moving part (600) to and from the opening of the water container (20).

10. The hydrogen water generator of any one of claims 1 to 9, wherein a portion of the actuator (150) is coupled with the sealing plate (200).

11. The hydrogen water generator of any one of claims 1 to 10, wherein the sealing plate (200) is divided into a central portion (206), a peripheral portion (205), and a connection portion (207) between the central portion (206) and the peripheral portion (205), the central portion (206) is coupled to the water outlet (322), the peripheral portion (205) is coupled to the moving part (600), and the connection portion (207) is elastically deformable with respect to the central portion (206) and the peripheral portion (205).

12. The hydrogen water generator of any one of claims 1 to 11, wherein the moving part (600) including a seating surface (411) for seating the water container (20), and the actuator (150) is configured to move the moving part (600) to move the water container (20) to and from the sealing plate (200).

13. The hydrogen water generator of any one of claims 1 to 12, further comprising a seating plate (410), wherein the seating plate (410) includes a plurality of holes.

14. The hydrogen water generator of any one of claims 1 to 12, further comprising a seating plate (410), wherein the seating plate (410) includes a light emitter (430) for use in aligning the water container (20) with the water outlet (322).

15. The hydrogen water generator of any one of claims 1 to 12, further comprising a seating plate (410) including a magnetic body (414) for use in aligning the water container (20) with the water outlet (322).

## Amended claims

### Amended claims in accordance with Rule 137(2) EPC.

1. A hydrogen water generator comprising:
a main body (100) including a center body (110), an upper body (130) extending forward from a top part of the center body (110) and a lower body (120) extending forward from a bottom part of the center body (110);
a moving part (600) movably coupled to the upper body (130) so as to move up and down from the upper body (130);a water tank (510) for receiving and storing water;
an electrode module (520) coupled to the water tank (510), and configured to generate hydrogen water in the water tank (510);
a sealing plate (200) fixedly coupled to the lower end of the moving part (600), the sealing plate (200) having a coupling hole (220) in the center of the sealing plate (200);
a water outlet pipe (321) including a water outlet (322) coupled to the sealing plate (200) at the coupling hole (220);
a pump (330) for pumping the hydrogen water stored in the water tank (510) to the water outlet (322); and
an actuator (150) configured to move the moving part (600) downward so that the sealing plate (200) closes an upwardly opened opening of a water container (20) being placed under the water outlet (322);
wherein an outer diameter of the sealing plate (200) is larger than a diameter of the opening of the water container (20) being used.

2. The hydrogen water generator of claim 1, wherein the sealing plate (200) is elastically deformable to elastically deform in an external force direction at a point where the external force is applied at the sealing plate (200).

3. The hydrogen water generator of claim 1 or 2, wherein the sealing plate (200) includes a center part (201) and an outer part (202) surrounding the center part (201), the center part (201) is a rigid material and the outer part (202) is a flexible material.

4. The hydrogen water generator of any one of claims 1 to 3, wherein the sealing plate (200) includes an upper part (203) and a lower part (204) covering a lower surface of the upper part (203), the upper part (203) is a rigid material and the lower part (204) is a flexible material.

5. The hydrogen water generator of any one of claims 1 to 4, wherein the sealing plate (200) includes an inclined surface (211) on at least a portion of the sealing plate (200), the inclined surface (211) formed over a circumferential direction centered around the water outlet (322), an angle of inclination of a tangent of the inclined surface (211) with a horizontal plane at a point farther away from the water outlet (322) is larger than an angle of inclination of a tangent of the inclined surface (211) with a horizontal plane at a point closer to the water outlet (322).

6. The hydrogen water generator of any one of claims 1 to 4, wherein the sealing plate (200) includes an inclined surface (211) on at least a portion of the sealing plate (200), the inclined surface (211) formed over a circumferential direction centered around the water outlet (322), an angle of inclination of a tangent of the inclined surface (211) with a horizontal plane at a point closer from the water outlet (322) is larger than an angle of inclination of a tangent of the inclined surface (211) with a horizontal plane at a point farther away to the water outlet (322).

7. The hydrogen water generator of any one of claims 1 to 6, wherein at least one groove (213) is formed on the sealing plate (200) corresponding to the opening of the water container (20).

8. The hydrogen water generator of any one of claims 1 to 7, wherein at least one protrusion is formed on the sealing plate (200) corresponding to the opening of the water container (20).

9. The hydrogen water generator of any one of claims 1 to 8, wherein a portion of the actuator (150) is coupled with the sealing plate (200).

10. The hydrogen water generator of any one of claims 1 to 9, wherein the sealing plate (200) is divided into a central portion (206), a peripheral portion (205), and a connection portion (207) between the central portion (206) and the peripheral portion (205), the central portion (206) is coupled to the water outlet (322), the peripheral portion (205) is coupled to the moving part (600), and the connection portion (207) is elastically deformable with respect to the central portion (206) and the peripheral portion (205).

11. The hydrogen water generator of any one of claims 1 to 10, further comprising:
a seating part (400) protruding forward from the lower end of the water tank (510) and formed on an upper side of the lower body (120), the seating part (400) including a seating surface (411) for seating the water container (20).

12. The hydrogen water generator of any one of claims 1 to 10, further comprising: a seating part (400) protruding forward from the lower end of the water tank (510), the seating part (400) including a seating plate (410) configured to form a seating surface (411) on which the water container (20) is placed, wherein the seating plate (410) includes a plurality of holes.

13. The hydrogen water generator of any one of claims 1 to 10, further comprising: a seating part (400) protruding forward from the lower end of the water tank (510), the seating part (400) including a seating plate (410) configured to form a seating surface (411) on which the water container (20) is placed, wherein the seating plate (410) includes a light emitter (430) for use in aligning the water container (20) with the water outlet (322).

14. The hydrogen water generator of any one of claims 1 to 10, further comprising: a seating part (400) protruding forward from the lower end of the water tank (510), the seating part (400) including a seating plate (410) configured to form a seating surface (411) on which the water container (20) is placed, wherein the seating plate (410) includes a magnetic body (414) for use in aligning the water container (20) with the water outlet (322).
